(19) **Europäisches Patentamt**

**European Patent Office**

**Office européen des brevets**

(11) **EP 1 492 051 A2**

(12) **EUROPEAN PATENT APPLICATION**

(43) Date of publication:
29.12.2004 Bulletin 2004/53

(51) Int Cl.⁷: **G06T 5/00**

(21) Application number: 04015027.8

(22) Date of filing: 25.06.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 27.06.2003 KR 2003042350

(71) Applicants:
- **Yonsei University**
  **Seoul 120-749 (KR)**
- **Sungjin C&C Co.,LTD.**
  **Seoul, 153-802 (KR)**

(72) Inventors:
- **Lim, In-Keon**
  **Seoul 137-049 (KR)**
- **Kang, Moon Gi**
  **Goyang City Gyeonggi-do 411-370 (KR)**
- **Park, Sung Cheol**
  **Seoul 137-074 (KR)**

(74) Representative: **Eisenführ, Speiser & Partner**
**Patentanwälte Rechtsanwälte**
**Postfach 10 60 78**
**28060 Bremen (DE)**

(54) **Method of restoring and reconstructing super-resolution image from low-resolution compressed image**

(57) Provided is a method of restoring and/or reconstructing a super-resolution image from low-resolution images compressed in a digital video recorder (DVR) environment. The present invention can remove a blur of a video sequence, caused by optical limitations due to a miniaturized camera of a digital video recorder monitoring system, a limitation of spatial resolution due to an insufficient number of pixels of a CCD/CMOS image sensor, and noises generated during image compression, transmission and storing processes, to restore high-frequency components of low-resolution images (for example, the face and appearance of a suspect or numbers of a number plate) to reconstruct a super-resolution image. Consequently, an interest part of a low-resolution image stored in the digital video recorder can be magnified to a high-resolution image later, and the effect of an expensive high-performance camera can be obtained from an inexpensive low-performance camera.

FIG.1

: REFERENCE LOW-RESOLUTION IMAGE

**Description**

CROSS REFERENCES TO RELATED APPLICATIONS

This application is based upon the Korean Patent Application No.2003-42350 claiming priority under Paris Convention, filed on June 27, 2003, the contents of which is hereby incorporated herein by reference in its entirety for all purposes as if fully set forth herein.

FIELD OF THE INVENTION

The present invention relates to a method of restoring and/or reconstructing a Super-resolution (SR) image, more particularly, to a method of restoring and/or reconstructing a SR image from low-resolution (LR) images compressed in a digital video recorder (DVR) environment.

BACKGROUND OF THE RELATED ART

In most electronic imaging applications, images with high resolution (HR) are desired and often required. HR means that pixel density within an image is high, and therefore an HR image can offer more details that may be critical in various applications. For example, HR medical images are very helpful for a doctor to make a correct diagnosis. It may be easy to distinguish an object from similar ones using HR satellite images, and the performance of pattern recognition in computer vision can be improved if an HR image is provided.

Since the 1970s, charge-coupled device (CCD) and CMOS image sensors have been widely used to capture digital images. Although these sensors are suitable for most imaging applications, the current resolution level and consumer price will not satisfy the future demand. For example, people want an inexpensive HR digital camera/camcorder or see the price gradually reduce, and scientists often need a very HR level close to that of an analog 35 mm film that has no visible artifacts when an image is magnified. Thus, finding a way to increase the current resolution level is needed.

The most direct solution to increase spatial resolution is to reduce the pixel size (i.e., increase the number of pixels per unit area) by sensor manufacturing techniques. As the pixel size decreases, however, the amount of light available also decreases. It generates shot noise that degrades the image quality severely. To reduce the pixel size without suffering the effects of shot noise, therefore, there exists the limitation of the pixel size reduction, and the optimally limited pixel size is estimated at about 40 $\mu m^2$ for a 0.35 $\mu m$ CMOS process.

The current image sensor technology has almost reached this level. Another approach for enhancing the spatial resolution is to increase the chip size, which leads to an increase in capacitance. Since large capacitance makes it difficult to speed up a charge transfer rate, this approach is considered ineffective. The high cost for high precision optics and image sensors is also an important concern in many commercial applications regarding HR imaging.

Therefore, a new approach toward increasing spatial resolution is required to overcome these limitations of the sensors and optics manufacturing technology. One promising approach is to use signal processing techniques to obtain an HR image (or sequence) from observed multiple low-resolution (LR) images. Recently, such a resolution enhancement approach has been one of the most active research areas, and it is called super resolution (SR) (or HR) image reconstruction or simply resolution enhancement. In the present invention, we use the term "SR image reconstruction" to refer to a signal processing approach toward resolution enhancement because the term "super" in "super resolution" represents very well the characteristics of the technique overcoming the inherent resolution limitation of LR imaging systems.

The major advantage of the signal processing approach is that it may cost less and the existing LR imaging systems can be still utilized. The SR image reconstruction is proved to be useful in many practical cases where multiple frames of the same scene can be obtained, including medical imaging, satellite imaging, and video applications.

One application is to reconstruct a higher quality digital image from LR images obtained with an inexpensive LR camera/camcorder for printing or frame freeze purposes. Typically, with a camcorder, it is also possible to display enlarged frames successively. Synthetic zooming of region of interest (ROI) is another important application in surveillance, forensic, scientific, medical, and satellite imaging. For surveillance or forensic purposes, a digital video recorder (DVR) is currently replacing the CCTV system, and it is often needed to magnify objects in the scene such as the face of a criminal or the license plate of a car.

Recently, as a demand for an unmanned monitoring system increases, the improvement of picture quality of images recorded in a digital video recorder is required. The picture quality of recorded images is remarkably deteriorated due to optical limitations according to a miniaturization of camera required for the unmanned monitoring system, that is, the limitations of spatial resolution caused by an insufficient number of pixels of a cheap low-performance CCD/CMOS image sensor, and noises generated during an image compression, storing and transmitting processes. In order to implement an efficient unmanned monitoring system, the deterioration of the spatial resolution must first be overcome.

The spatial resolution means the number of pixels per unit area in an image. It is difficult to analyze a low-resolution (LR) image because high-frequency components and/or fine components of the original image, which are present in HR image, are damaged in the low-resolution image.

Captured images at the scene of a crime, for example, can sometimes be useless because of LR. In other words, the images containing the facial features and/or the clothes of a suspect, and a license plate of an automobile involved in the criminal scene cannot be deciphered when the image recorded in the DVR system is at a low resolution.

There may be proposed an approach for improving the picture quality of a stored image where an expensive high-performance camera is employed in the monitoring system. However, this proposed method is not suitable for a practical application in the unmanned monitoring system in a sense that it costs too much for purchasing the HR camera required in the unmanned monitoring system. Accordingly, it sis strongly required to develop a digital image processing algorithm which allows us to obtain HR image from LR images captured from inexpensive low-performance cameras.

## SUMMARY OF THE INVENTION

A primary object of the present invention is to provide a method for restoring and reconstructing a super-resolution (SR) image from low-resolution (LR) images obtained from a low-resolution (LR) image capturing device.

Another object of the present invention is to provide a method of restoration by removing a blur of an image due to optical limitations caused by miniaturization of a lens of the image capturing device while preserving the contour of the image.

Yet another object of the present invention is to provide a method of reconstructing a high-resolution image, that is, an image with a large number of pixels, from low-resolution images, that is, images with a small number of pixels, by eliminating aliasing effect caused by insufficient number of pixels of the image capturing device.

Still another object of the present invention is to provide a method of removing compression noises generated during a data compression process for storing an image in a digital video recorder, namely, blocking artifact and ringing effect, while preserving the contour of the image.

To accomplish the afore-mentioned objects, according to the present invention, there is provided a method of restoring a super-resolution image having the size of $L_1 N_1 \times L_2 N_2$ from P low-resolution images, each of which has the size of $N_1 \times N_2$, which models quantization noise of DCT coefficients for each of the low-resolution images, which has been divided into a plurality of independent blocks, discrete-cosine-transformed and quantized, into a random variable having Gaussian distribution, estimates a sub-pixel shift between the P low-resolution images such that a reference image is decided among the P low-resolution images and a least square of a motion parameter between the reference image and the other images is obtained through Taylor's series expansion, and a smoothing constraint representing prior information about the high-resolution image is modeled into a nonstationary Gaussian distribution to apply an adaptive smoothing constraint making a mean of noises be zero to the restoring process, thereby removing a compression noise while preserving the contour of the image.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

In the drawings:

FIG.1 is a schematic diagram illustrating the algorithm for restoring and reconstructing a super-resolution (SR) image from a plurality of low-resolution (LR) images in accordance with the present invention;

FIG. 2 is a schematic diagram illustrating the process for obtaining low-resolution images for later use for restoring and reconstructing a super-resolution image in accordance with the present invention;

FIG. 3 is a schematic diagram illustrating the necessity of the interpolation step in the warping process carried out according to the present invention;

FIG. 4 is a schematic diagram illustrating the point spread function (PSF) of a low-resolution (LR) sensor;

FIG. 5 is a flow chart illustrating the iteration method according to the present invention;

FIGS. 6a, 6b, 6c and 6d are schematic diagrams illustrating the exemplary simulation results when the resolution enhancement of images is applied in accordance with the present invention;

FIG. 7 shows a system software interface for restoring a super-resolution image using the method of restoring a super-resolution image according to the present invention;

FIG. 8a shows a nearest neighborhood interpolated image obtained by a prior art; and

FIG. 8b shows a super-resolution image obtained by the algorithm of the present invention.

## DETAILED DESCRIPTION OF THE INVENTION

Reference will now be made in detail to the preferred embodiments of the present invention, examples of which are illustrated in the accompanying drawings.

A CODEC, which is an encoding and decoding device included in a digital video recorder, compresses and stores a digital video sequence transmitted from an image capturing device. It should be noted, however, that an appreciable amount of high-frequency components of the original image can be lost during the quantization process for the above-mentioned compression of a digital video sequence.

Since the lost high-frequency components usually have a detailed important information (for example, the license plate of a suspect's auto, the facial features, appearance of the suspect and so on) of the original image, it is the purpose of the present invention to provide a method to restore those high-frequency components.

The present invention provides a scheme of restoring a high-resolution (HR or SR) image from a plurality of video sequences stored in the DVR on the ground that each frame of images lose high-frequency components in an independent manner, which makes it possible to restore HR image from a multiple of LR images because the high-frequency components lost for each frame will be independent.

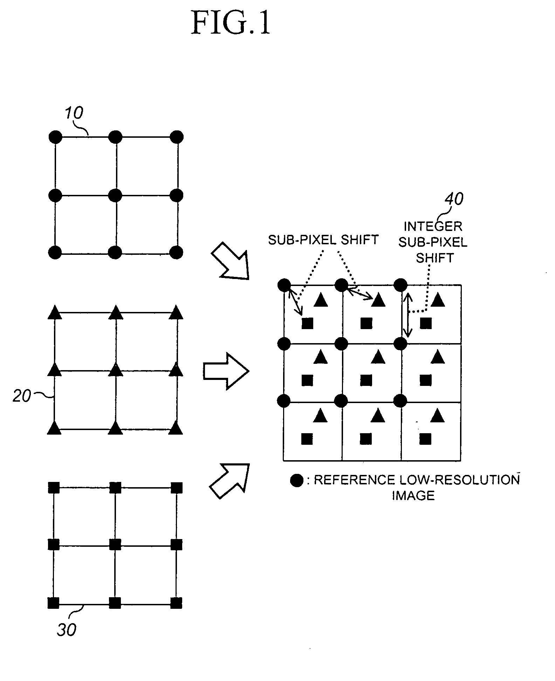

A method of restoring and reconstructing a high-resolved image from low-resolution compressed images according to the present invention will be explained with reference to FIGS. 1 through 8.

FIG.1 shows an algorithm of restoring and reconstructing a super-resolution (SR) image from a plurality of low-resolution (LR) images according to the present invention.

An image processing technique for restoring and reconstructing an SR image, proposed by the present invention, exploits an image restoration and an interpolation.

The image restoration is a process of recovering the degraded (e.g. blurred, noisy) image, which is caused by optical distortions (out of focus, diffraction limit, etc.) motion blur due to limited shutter speed, noise that occurs within the sensor or during transmission, and insufficient sensor density.

The image restoration is a basic element constituting the method disclosed in the present invention for restoring and reconstructing a super-resolution image. That is, the image restoration of the present invention is a technique of restoring and reconstructing a super-resolution image while the spatial resolution of captured images is kept constant.

The basic premis for increasing the spatial resolution in SR techniques of the present invention is the availability of multiple LR images captured from the same scene. In SR, typically, the LR images represent different "looks" at the same scene. That is, LR images are sub-sampled (aliased) as well as shifted with sub-pixel precision.

If the LR images are shifted by integer units, then each image contains the same information, and thus there is no new information that can be used to reconstruct an SR image. If the LR images have different sub-pixel shifts from each other and if aliasing is present, however, the new information contained in each LR image can be exploited to obtain an SR image.

Another technique related to SR reconstruction is image interpolation that increases the number of pixels of an image to magnify the image. This approach, however, has a technical limit in the picture quality because it employs LR image which suffers from aliasing for magnifying the LR image even if an ideal sinc function-based interpolation method has been used. That is, it should be noted that the interpolation can not restore high-frequency components of the original image, which have been lost or damaged due to a restriction on the number of pixels of LR image capturing device, when the interpolation method is used. Due to this reason, the image interpolation is not considered as a SR image restoring/reconstructing algorithm.

To overcome the limitation of the prior art (image interpolation from a single image), the present invention discloses a method of restoring/reconstructing a super-resolution image from the analysis and restoration of LR images which have different information due to different sub-pixel shifts for the same scene.

FIG. 1 shows the principle of a super-resolution image restoring/reconstructing method according to the present invention.

In the super-resolution image restoring/reconstructing algorithm according to the present invention, LR images mean images that are different from each other for the same scene. To obtain different looks at the same scene, some relative scene motions must exist from frame to frame via multiple scenes or video sequences. Multiple scenes can be obtained from one camera with several captures or from multiple cameras located at different positions.

In summary, the low-resolution images are defined as images that have different sub-pixel shifts and sampled at a sampling rate lower than the Nyquist sampling rate in order to have aliasing effect while the LR images apparently look like identical.

If the low-resolution images have integer pixel shifts, the images have the same information and thus an image with resolution higher than the current resolution of the images cannot be reconstructed. When the low-resolution images have different sub-pixel shifts, the images have different information and one of the images cannot represent the other images. In this case, a high-resolution image can be constructed, as shown in FIG. 1, using the information of each of the low-resolution images if shifts between the low-resolution images is previously known or they can be estimated.

The SR image restoring/reconstructing method according to the present invention is a new algorithm that reconstructs a high-resolution image from video sequences stored in a digital video recorder according to the basic principle shown in FIG. 1 and, simultaneously, removes an image blur caused by a limitation of a lens and a compression noise generated during a compression process while preserving the contour of the image.

Moreover, the present invention has a feature that models a compression noise caused by quantization in a DCT domain so that those noises can be removed during the restoring/reconstructing process.

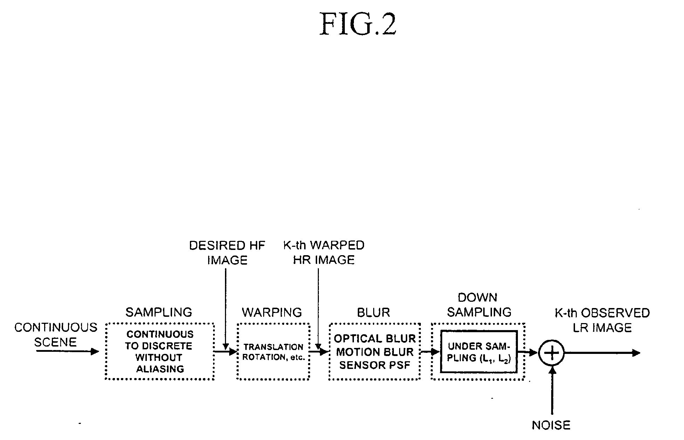

FIG. 2 is a schematic diagram modeling the LR image acquisition process for restoring and reconstructing the SR image according to the present invention.

To restore and reconstruct an HR image from LR images, an observation model should be defined for the relationship between them.

Consider the desired HR image of size $L_1N_1 \times L_2N_2$ written in lexicographical notation as the vector of the high-resolved image represented by x. That is, x is an ideal SR image that has not been degraded by a blur and/or noise and sampled at a sampling rate higher than the Nyquist sampling rate for no aliasing.

A k-th LR image obtained via a low-resolution image capturing device can be modeled as an image with blurring after x is shifted by sub-pixels and is undersampled with factors $L_1$ and $L_2$. A mathematical model for the acquisition of the k-th LR image is represented as the followings.

[Equation 1]

$$y_k = DB_kM_kx + n_k, \; k = 1,2,..., p$$

Here, the k-th low-resolution image among P low-resolution images, each of which has a size of $N_1 \times N_2$, is represented by $\mathbf{y_k}$ lexicographically arranged. $\mathbf{M_k}$ denotes a geometrical warping matrix containing a global or local translation, rotation, and so on, and $\mathbf{B_k}$ is a matrix representing a blur. In addition, $\mathbf{D}$ is a matrix representing undersampling from a high-resolution image into a low-resolution image, and $\mathbf{n_k}$ represents a noise including a compression noise.

More specifically, the warping matrix $\mathbf{M_k}$ represents geometrical warping with sub-pixel shifts. Here, it is noted that the unit of shift is decided by the grid of the LR image. For example, when the image is shifted by one pixel horizontally in the LR image grid, the dimension of the shift becomes unity in the horizontal direction. When shifted by a sub-pixel, the dimension of the shift becomes a decimal. Furthermore, if the fractional unit of motion upon the sub-pixel shi-ft does not coincide with an HR image grid, interpolation into a high-resolution image grid is required.

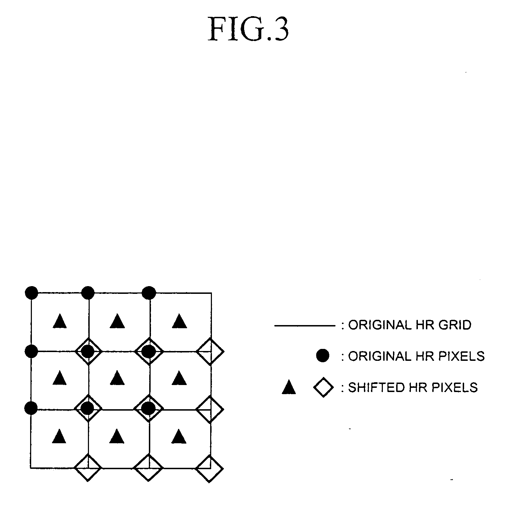

FIG. 3 is a schematic diagram illustrating the importance for interpolation in a warping process in accordance with the present invention. Referring to FIG. 3, there are two undersampling factors both in the vertical and horizontal directions (that is, the horizontal and vertical sizes of LR image are half the horizontal and vertical sizes of HR image).

In FIG. 3, a circle represents the original (reference) HR image x, and a triangle and a diamond are globally shifted version of x. If the down-sampling factor is two, a diamond has (0.5, 0.5) sub-pixel shift for the horizontal and vertical directions and a triangle has a shift which is less than (0.5, 0.5).

The high-resolution image represented by diamond shapes is shifted by one pixel both in vertical and in horizontal directions, respectively. Thus, the motion vector of the high-resolution image becomes (0.5, 0.5) on the basis of the low-resolution image grid. The high-resolution image represented by triangles has a motion vector of smaller than (0.5, 0.5).

While the diamond pixels do not require interpolation because they are matched with the high-resolution image grid, the triangular pixels need interpolation because they are not matched with the high-resolution image grid.

The blur matrix $\mathbf{B_k}$ represents blurring which may be caused by an optical system (e.g., out of focus, diffraction limit, aberration, etc.), relative motion between the imaging system and the original scene, and the point spread function (PSF) of the LR sensor.

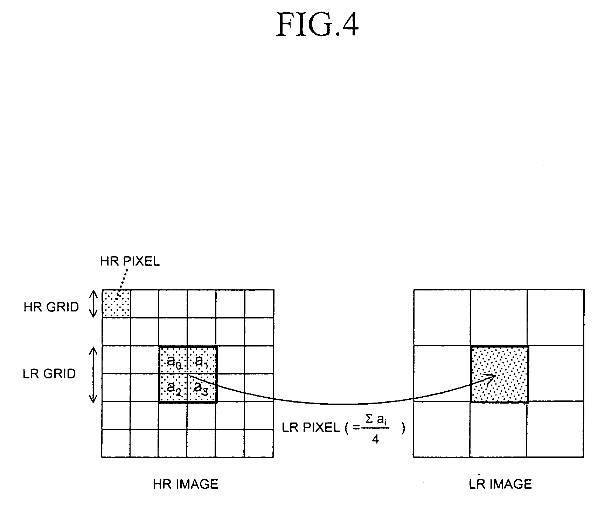

FIG. 4 illustrates the LR sensor PSF. The LR sensor PSF is modeled as a spatial averaging operator (blur) that represents the relationship between SR pixels and LR pixels on the image sensor, which necessarily should be incorporated in the super-resolution image restoring and reconstructing algorithm.

The SR image restoring and reconstructing algorithm according to the present invention comprises a step of estimating a motion vector between LR images, followed by estimating the high-resolution image x modeled by Equation 1 using Bayesian approach.

In order to estimate the HR image x modeled by Equation 1, a probability density function that reflects the probabilistic characteristics of noise $n_k$ should be modeled beforehand. While the noise $n_k$ comes from various sources, only a compression noise is considered here since the compression noise generated during the compression process is of significance.

Traditionally, it has been assumed that the compression noise be white Gaussian in a spatial domain. However, since the compression noise in reality is not definitely white Gaussian in a spatial domain, it is required to exploit the statistical characteristics of the compression noise for the image restoring/reconstructing process.

Most of data compression algorithms for motion pictures include steps of dividing an image into independent blocks and performing DCT (discrete-cosine-transform) transformation on those blocks to quantize the DCT coefficients. Compression noises such as blocking artifact and ringing artifact, which are frequently generated in compressed images, can be modeled as a quantization noise due to quantization process in the DCT domain.

In order to get a probability density function for the quantization noise in the DCT domain, it is necessary to know exactly the probability density function of DCT coefficients of image, which is impossible in reality.

Although it is difficult to model the probability density function of the quantization noise in a direct manner, it can be assumed that the quantization noises of DCT coefficients are also independent if the probability density functions of the DCT coefficients of images are symmetric.

Since the compression noise in the spatial domain can be represented by a linear combination of inverse DCT of the quantization noise in the DCT domain, the compression noise in the spatial domain can be modeled as a random variable having a Gaussian distribution by central limit theorem. As a consequence, if n is a vector obtained by lexicographically arranging a compression noise in a block of image, the probability density function of n is defined as follows.

[Equation 2]

$$P_N(\mathbf{n}) = Z \exp\left(-\tfrac{1}{2}\mathbf{n}^T \mathbf{R_n}^{-1}\mathbf{n}\right)$$

Here, $Z$ is a normalizing constant for making the sum of probability unity, and $\mathbf{R_n}$ is a covariance matrix representing correlation of noise vector n. It can be understood that the model for the compression noise, which is proposed by Equation 2, does not depend on the probability distribution of DCT coefficients of image.

To accomplish the probability density function of the compression noise in the spatial domain, represented by Equation 2, the inverse matrix of the covariance matrix, $\mathbf{R}_n^{-1}$, must be obtained. $\mathbf{R}_n^{-1}$ can be obtained by estimating the variance of the quantization noise in the DCT domain and then transforming the variance into the spatial domain. However, this method is not suitable for the actual case because it is assumed that the DCT coefficients of image' have uniform distribution within a quantization interval.

Furthermore, since $\mathbf{R}_n^{-1}$ has an identical form in all blocks of image, it cannot adaptively reflect the characteristics of the blocks. To resolve this problem, the present invention directly models $\mathbf{R}_n^{-1}$ in the spatial domain as follows.

Since quantization noises of DCT coefficients in the DCT domain are independent, the covariance matrix of the quantization noises becomes a diagonal matrix. Accordingly, $\mathbf{R}_n^{-1}$ in the spatial domain must be diagonalized by DCT basis functions. The present invention exploits this characteristic to model $\mathbf{R}_n^{-1}$ as a matrix that the DCT basis functions have as an eigenvector. Consequently, $\mathbf{R}_n^{-1}$ is modeled as a kronecker product of a specific form of tridiagonal Jacobi matrix as follows.

[Equation 3]

$$\mathbf{R}_n^{-1} = \frac{1}{1-\rho^2} \begin{bmatrix} \mathbf{R}_1 & -\rho\mathbf{R}_1 & 0 & \cdots & 0 & 0 \\ -\rho\mathbf{R}_1 & (1+\rho^2)\mathbf{R}_1 & -\rho\mathbf{R}_1 & \cdots & 0 & 0 \\ \cdot & \cdot & \cdot & \cdot & \cdot & \cdot \\ 0 & 0 & \cdots & -\rho\mathbf{R}_1 & (1+\rho^2)\mathbf{R}_1 & -\rho\mathbf{R}_1 \\ 0 & 0 & \cdots & 0 & -\rho\mathbf{R}_1 & \mathbf{R}_1 \end{bmatrix}$$

Here, $\mathbf{R}_1$ is represented as follows.

[Equation 4]

$$\mathbf{R}_1 = \frac{1}{1-\rho^2} \begin{bmatrix} 1 & -\rho & 0 & \cdots & 0 & 0 \\ -\rho & 1+\rho^2 & -\rho & \cdots & 0 & 0 \\ \cdot & \cdot & \cdot & \cdot & \ddots & \cdot \\ 0 & 0 & \cdots & -\rho & 1+\rho^2 & -\rho \\ 0 & 0 & \cdots & 0 & -\rho & 1 \end{bmatrix}$$

Here, ρ represents one-step correlation parameter in the first-order Markov process, which is estimated in each block using the following biased sample operator.

[Equation 5]

$$\hat{\rho} = \frac{\hat{R}_n(1,0) + \hat{R}_n(0,1)}{2R_n(0,0)}$$

[Equation 6]

$$\hat{R}_n(k,l) = \frac{1}{L^2} \sum_{i=0}^{L-k-1} \sum_{j=0}^{L-l-1} \mathbf{n}(i,j)\mathbf{n}(i+k,j+l)$$

Here, the bock size is $L \times L$.

The process of estimating the covariance matrix of the compression noise through Equations 2 through 6 has high adaptability in response to block characteristic in the super-resolution image reconstructing process. That is, the process of estimating the covariance matrix of the compression noise considers that variance of quantization noise in low-frequency components of DCT coefficients is larger in a smooth block and variance of quantization noise in high-frequency components is larger in a block having lots of minute components.

In other words, $\mathbf{R}_n^{-1}$ in Equation 3 serves as a high-pass filter because ρ is estimated to be a positive number in the smooth block, and $\mathbf{R}_n^{-1}$ functions as a low-pass filter because $\rho$ is estimated to be a negative number in the block having lots of minute components. In this manner, the compression noise is adaptively whitened during the reconstructing process.

To restore/reconstruct a super-resolution image, a sub-pixel shift between low-resolution images should be known. In general, the sub-pixel shift between low-resolution images is not known in advance so that it should be estimated. This estimation is called registration. The present invention uses a method using Taylor's series expansion as a method for estimating the sub-pixel shift.

To estimate the sub-pixel shift, a reference image is decided first and then a motion parameter between the reference image and other images is obtained. When it is assumed that $y_1$ in Equation 1 is the reference image and only shifts in horizontal and vertical directions are considered, the other images can be represented as follows.

[Equation 7]

$$y_k(x,y) = y_1(x + \delta_{h,k}, y + \delta_{v,k}), \qquad \text{for } k = 2,...,p$$

Equation 7 can be simplified using first three terms of Taylor's series as follows.

[Equation 8]

$$y_k(x,y) \approx y_t(x,y) + \delta_{h,k}\frac{dy_1(x,y)}{dx} + \delta_{v,k}\frac{dy_1(x,y)}{dy}$$

On the basis of the relationship of Equation 8, least squares of a motion vector is represented as follows.

[Equation 9]

$$MR_k = V_k$$

Here, $M$ is represented as follows.

[Equation 10]

$$\mathbf{M} = \begin{bmatrix} \sum\left(\dfrac{d\mathbf{y}_1(x,y)}{dx}\right)^2 & \sum\left(\dfrac{d\mathbf{y}_1(x,y)}{dx}\dfrac{d\mathbf{y}_1(x,y)}{dy}\right) \\ \sum\left(\dfrac{d\mathbf{y}_1(x,y)}{dx}\dfrac{d\mathbf{y}_1(x,y)}{dy}\right) & \sum\left(\dfrac{d\mathbf{y}_1(x,y)}{dy}\right)^2 \end{bmatrix}$$

[Equation 11]

$$R_k = [\delta_{h,k}, \delta_{v,k}]^T$$

[Equation 12]

$$V_k = \begin{bmatrix} \sum (y_k(x,y) - y_1(x,y))\dfrac{dy_1(x,y)}{dx} \\ \sum (y_k(x,y) - y_1(x,y))\dfrac{dy_1(x,y)}{dy} \end{bmatrix}$$

Accordingly, the motion estimation parameter $R_k$ is represented as follows.

[Equation 13]

$$R_k = M^{-1}V_k$$

While the motion estimation in Equation 13 considers only horizontal and vertical shifts, other shifts including rotation also can be considered. To estimate shifts more accurately, the calculation of Equation 13 is repeated until an error becomes small.

The present invention uses MAP method in order to estimate the super-resolution image x based on the model of Equation 1 and the motion estimation parameter estimated by Equation 13. A MAP estimation value for $\mathbf{x}$ is $\hat{x}$ that maximizes a posteriori probability distribution. and it is defined as follows.

[Equation 14]

$$\hat{x} = \arg\max P(x|y_1,y_2,.....,y_p) = \arg\max P(y_1,y_2,.....,y_p|x)P(x)$$

Here, $P(y_1,y_2,....,y_p|x)$ becomes $P(y_1|x)P(y_1|x)\cdots P(y_p|x)$ on the assumption that noises belonging to $y_k$ are independent. Furthermore, $P(y_k|x)$ has the same probability distribution as Equation 2 in an arbitrary block of an image because $P(y_k|x)=p(n_k)\cdot P(x)$ is smoothing constraint showing prior information of the image, which generally represents that energy of high-frequency components of the image is restricted.

The present invention can model $P(x)$ as a non-stationary Gaussian distribution to preserve the contour of the reconstructed high-resolution image as follows.

[Equation 15]

$$P_x(x) = Z \exp(-\frac{1}{2}(x - \bar{x})^T (x - \bar{x})$$

Here, $\bar{x}$ represents the non-stationary mean of $\mathbf{x}$ and it is estimated on the assumption that the mean of noises is zero such that the smoothing constraint can be applied while the contour of the image is preserved as follows.

[Equation 16]

$$\bar{x}(i,j) = \begin{cases} \frac{1}{h}\sum_{k,l\in h}\hat{y}(i-k, j-l), & \text{if } (i,j) \in \text{block boundary} \\ \frac{1}{\sum_{k,l} w_{k,l}}\sum_{k,l\in h}w_{k,l}\hat{y}(i-k, j-l), & \text{otherwise} \end{cases}$$

Here, *h* denotes support of a local window and $w_{k,l}$ represents a weighting function. In addition, $\hat{\mathbf{y}}$ denotes an initial high-resolution image obtained by synthesizing low-resolution images with the estimated motion parameter. Furthermore, $w_{k,l}$ is a weight for preventing even the contour of the image from being smoothed in the block and it is defined as follows.

[Equation 17]

$$w_{k,l} = \begin{cases} 1, & \text{if } |\hat{\mathbf{y}}(i,j) - \hat{\mathbf{y}}(k,l)| < \mathrm{T} \\ 0, & \text{if } |\hat{\mathbf{y}}(i,j) - \hat{\mathbf{y}}(k,l)| > \mathrm{T} \end{cases}$$

Here, *T* is a threshold value for deciding the size of the contour of the image. The estimation of the nonstationary mean of the image, defined by Equations 16 and 17, enables smoothing constraint in consideration of the compression process and has the following meaning. The blocking artifact caused by compression is smoothed because a mean is estimated in a square window on the boundary of a block in Equation 16.

On the other hand, a mean is estimated in the block within a range that does not cross the contour. Thus, minutes components in the block are weakly smoothed and preserved. In this manner, the compression noise can be effectively removed while preserving the contour of the image by using the adaptive smoothing constraint according to the present invention and the compression noise covariance matrix of Equation 3.

The MAP estimation value can be obtained by finding $\hat{\mathbf{x}}$ that minimizes the following cost function based on the probability density functions of Equations 2 and 5.

[Equation 18]

$$\hat{\mathbf{x}} = \arg\min \left[ \sum_{k=1}^{p} \left\| \mathbf{y}_k - \mathbf{DB}_k \mathbf{M}_k \mathbf{x} \right\|_{\mathbf{K}_k(\mathbf{x})^{-1}}^2 + \alpha_k(\mathbf{x}) \left\| \mathbf{x} - \overline{\mathbf{x}} \right\|^2 \right]$$

Here, $\mathbf{K}_k(\mathbf{x})^{-1}$ is a covariance matrix for the compression noise in the image and functions as Equation 3 in an arbitrary block. In Equation 18, $\alpha_k(\mathbf{x})$ is a regularization function, which controls balance between fidelity of the super-resolution image with respect to the low-resolution images and the smoothing constraint.

In the case that a predetermined regularization parameter is used to control the balance between the fidelity and the smoothing constraint, a noise may be revived from the reconstructed image when the regularization parameter is set to a value smaller than an appropriate value. Furthermore, the reconstructed image can be excessively smoothed when the regularization parameter is set to a value larger than the appropriate value. To find an optimum regularization parameter for an arbitrary image, the present invention uses the regularization function $\alpha_k(\mathbf{x})$, which is defined as follows.

[Equation 19]

$$\alpha_k(\mathbf{x}) = \frac{\left\| \mathbf{y}_k - \mathbf{DB}_k \mathbf{M}_k \mathbf{x} \right\|_{\mathbf{K}_k(\mathbf{x})^{-1}}^2}{\frac{1}{\gamma_k} - \left\| \mathbf{x} - \overline{\mathbf{x}} \right\|^2}$$

Here, $\gamma_k$ is a parameter that satisfies convexity and convergence conditions of the cost function of Equation 18 to secure global minimum. The present invention uses the regularization function of Equation 19 to adaptively decide $\gamma_k$ in each iteration step without having the regularization parameter.

That is, when an error with respect to a row-resolution image is large in a certain iteration step (when the quantity of noise is large), $\alpha_k(\mathbf{x})$ is increased and thus the image is smoothed more in the next step. On the contrary, when the error is small (when the quantity of noise is small), $\alpha_k(\mathbf{x})$ is decreased and thus the image is less smoothed in the next step.

Furthermore, when energy of high-frequency components of an image is decreased in a certain iteration step, $\alpha_k(\mathbf{x})$ is decreased and thus the image is less smoothed in the next step. The present invention is characterized in using the adaptive $\alpha_k(\mathbf{x})$.

$\hat{\mathbf{x}}$ for minimizing the cost function of Equation 18 can be obtained through differentiation of Equation 18 and it satisfies the following equation.

[Equation 20]

$$\sum_{k=1}^{p}\left\{(\mathbf{DB_k M_k})^T \mathbf{K_k}(\hat{\mathbf{x}})^{-1}(\mathbf{DB_k M_k}) + \alpha_k(\hat{\mathbf{x}})\right\}\hat{\mathbf{x}} = \sum_{k=1}^{p}\left\{(\mathbf{DB_k M_k})^T \mathbf{K_k}(\hat{\mathbf{x}})^{-1}\mathbf{y_k} + \alpha_k(\hat{\mathbf{x}})\bar{\mathbf{x}}\right\}$$

The estimated value $\hat{\mathbf{x}}$ of the super-resolution image of Equation 20 can be obtained by the following iteration technique.

[Equation 21]

$$\mathbf{x}^{n+1} = \mathbf{x}^n + \beta\left\{\sum_{k=1}^{p}(\mathbf{DB_k M_k})^T \mathbf{K_k}(\mathbf{x}^n)^{-1}\left(\mathbf{y_k} - \mathbf{DB_k M_k x}^n\right) - \alpha_k(\mathbf{x}^n)(\mathbf{x}^n - \bar{\mathbf{x}})\right\}$$

Here, $\beta$ is a parameter for controlling a convergence rate.

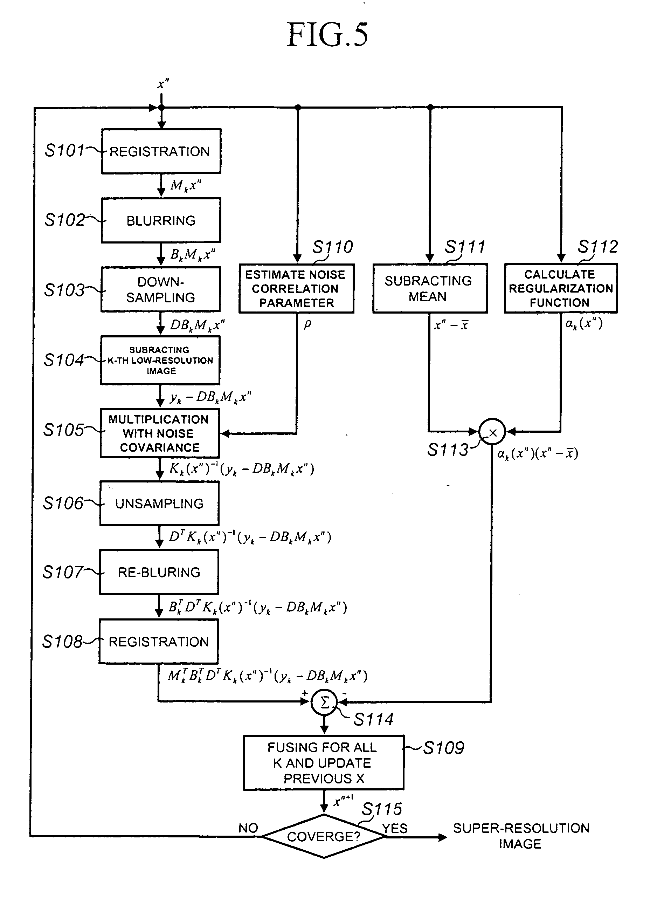

FIG. 5 is a flow chart showing the iteration method according to the present invention.

Referring to FIG. 5, an initial image is chosen at a first step. For example, a single low-resolution image is magnified by interpolation. At a second step S101, a high-resolution image $\mathbf{x}^n$ is registered by an estimated motion parameter value of the k-th low-resolution image $\mathbf{y_k}$.

At the third step, the registered image is blurred at S102, down-sampled at S103, and then a difference between the down-sampled image and $\mathbf{y_k}$ is obtained at S104.

At the fourth step S105, $\rho$ in Equation 5 is estimated for each of blocks of the difference image obtained through the steps S102, S103 and S104, and then the covariance matrix of Equation 3 is multiplied by $\rho$. Here, the multiplication of the covariance matrix is simply represented by convolution.

At the fifth step, the resultant image of the step S105 is upsampled at S106 and re-blurred at S107.

At the sixth step S108, the resultant image of the step 106 is inverse-registered by the motion parameter estimation value of $\mathbf{y_k}$.

At the seventh step S112, the regularization function $\alpha_k(\mathbf{x})$ is obtained by Equation 19.

At the eighth step, a difference image between $\mathbf{x}^n$ and $\bar{\mathbf{x}}$ is obtained at S111 and then the difference image is multiplied by $\alpha_k(\mathbf{x})$ at S113.

At the ninth step S114, a difference image between the image obtained by the sixth step and the image obtained by the eighth step is obtained.

At the tenth step S109, the second through ninth steps are executed for each of all low-resolution images (k=1, ......, p) and then resultants images are summed up.

At the eleventh step, the image obtained in the tenth step is multiplied by $\beta$ and then $\mathbf{x}^n$ is added to the multiplied result.

At the twelfth step, the second through eleventh steps are repeated until the iteration method converges.

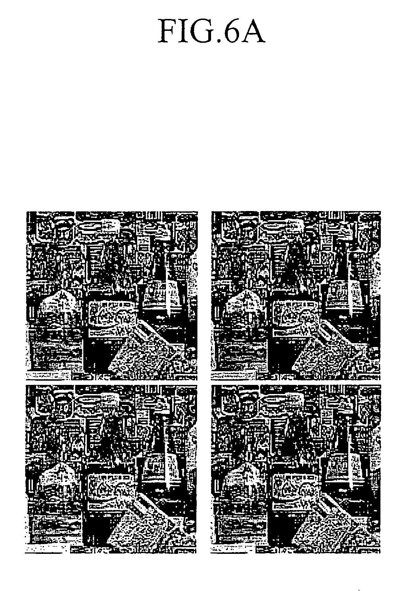

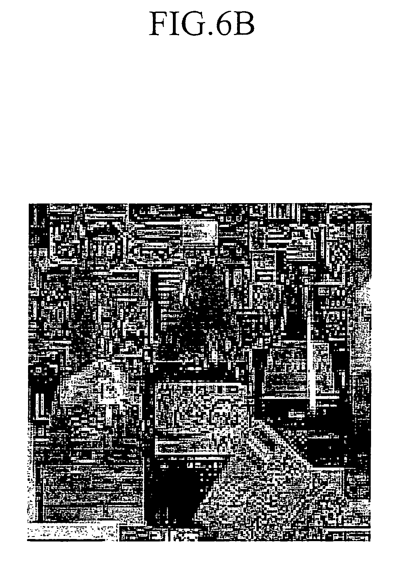

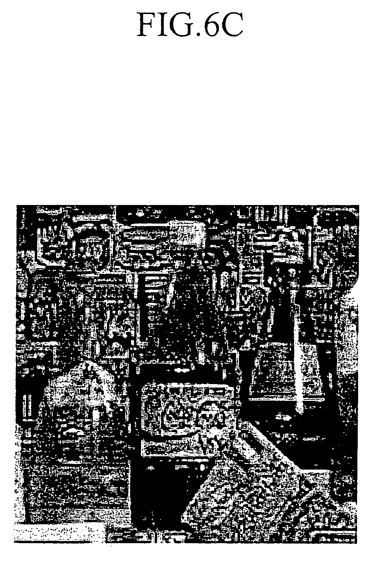

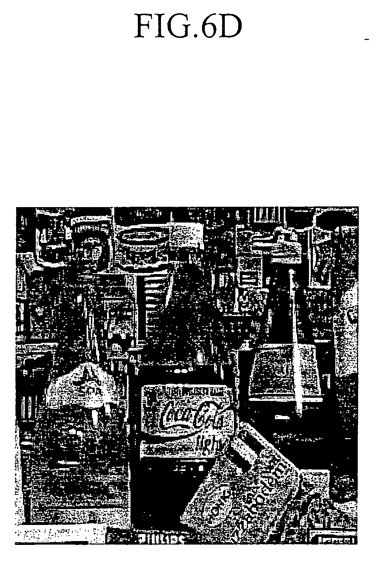

FIGS. 6a, 6b, 6c and 6d show results of simulations for improving resolution using the method of restoring a super-image according to the present invention.

FIG. 6a shows compressed low-resolution images each of which has the size of 128x128. These low-resolution images have sub-pixel shifts of {(0, 0), (0.5, 0), (0, 0.5), (0.5, 0.5)} on the basis of one of the images. FIG. 6b shows an image obtained by nearest-neighborhood-interpolating one of the low-resolution images of FIG. 6a, and FIG. 6c shows an image obtained by bilinear-interpolating one of the low-resolution images.

Referring to FIGS. 6b and 6c, there is a restriction on the improvement of resolution because interpolation cannot find lost or damaged high-frequency components of the low-resolution images.

FIG. 6d shows a super-resolution image obtained by the algorithm according to the present invention. It can be confirmed from FIG. 6d that high-frequency components are revived in the image. Furthermore, it can be confirmed that a compression noise such as blocking artifact and ringing artifact shown in FIGS. 6b and 6c has been removed from the image of FIG. 6d while the contour of the image is preserved.

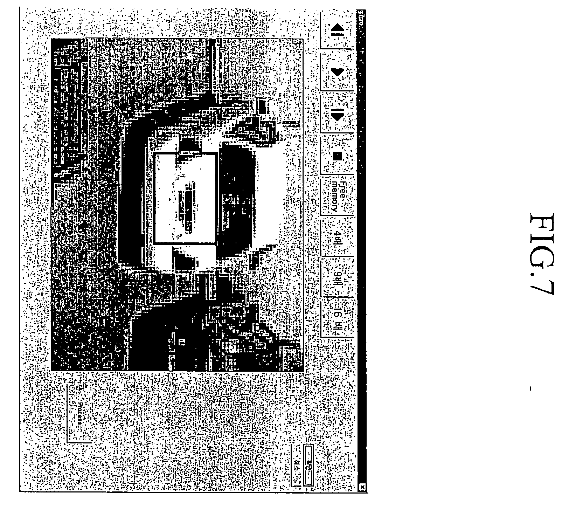

FIG. 7 shows a system software interface for using the super-resolution image restoring method according to the present invention. A super-resolution image can be restored from low-resolution images using the program shown in FIG. 7.

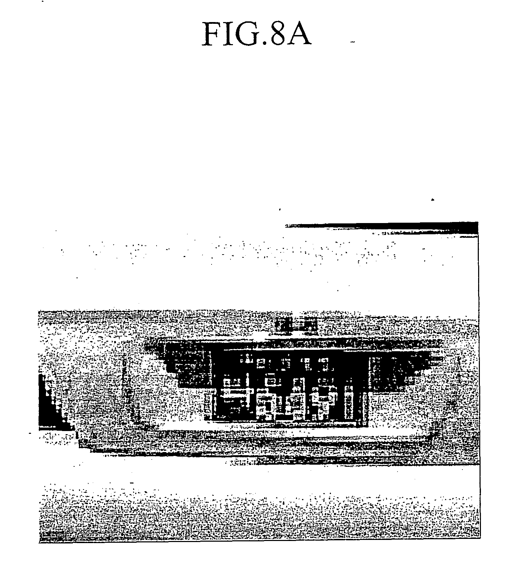

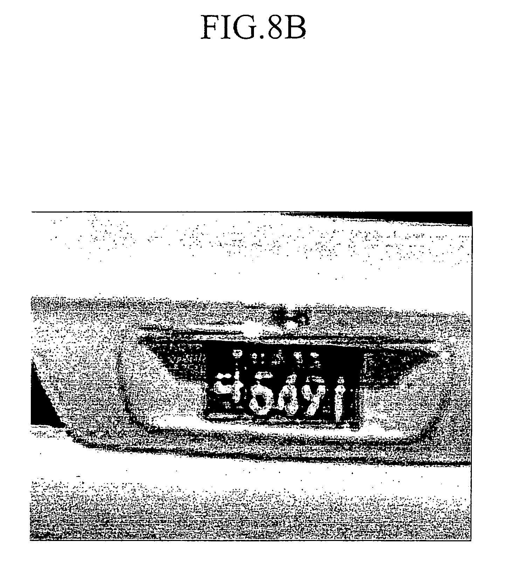

FIGS. 8a and 8b show high-resolution images restored from the low-resolution image shown in FIG. 7 using the super-resolution image restoring method of the present invention. FIG. 8a shows a nearest neighborhood interpolated image obtained by a prior art, and FIG. 8b shows a super-resolution image obtained by the algorithm of the present invention. In the image of FIG. 8a, numbers of the number plate, which are high-frequency components, are not clearly seen because aliasing has not been removed due to limited information of the low-resolution images. On the contrary, the numbers of the number plate are definitely seen in the image of FIG. 8b because aliasing has been removed using different information items of low-resolution images.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

As described above, the present invention can remove a blur of a video sequence, caused by optical limitations due to a miniaturized camera of a digital video recorder monitoring system, a limitation of spatial resolution due to an insufficient number of pixels of a CCD/CMOS image sensor, and noises generated during image compression, transmission and storing processes, to restore high-frequency components of low-resolution images (for example, the face and appearance of a suspect or numbers of a number plate) to reconstruct a super-resolution image. Consequently, an interest part of a low-resolution image stored in the digital video recorder can be magnified to a high-resolution image later, and the effect of an expensive high-performance camera can be obtained from an inexpensive low-performance camera.

**Claims**

1. A method of restoring super-resolution (SR) image having a size of $L_1N_1 \times L_2N_2$ from $P$ low-resolution (LR) images, each of which has a size of $N_1 \times N_2$, comprising steps of:

   modeling the quantization noise of DCT coefficients for each LR image (which is divided into a plurality of independent blocks, discrete-cosine-transformed and quantized) as a random variable having a Gaussian distribution; and
   estimating sub-pixel shifts between the P LR images and a reference image, which is chosen among the P low-resolution images, by obtaining a least mean square of a motion parameter between the reference image and the other images through Taylor's series expansion

   wherein a smoothing constraint representing prior information about the SR image is modeled as a non-stationary Gaussian distribution to apply an adaptive smoothing constraint, which makes the mean of noises zero, and thereby a compression noise is removed while the contour of the image is preserved.

2. The method as set forth in Claim 1, wherein the k-th LR image $\mathbf{y_k}$ among the $P$ low-resolution images is modeled by the following equation.

$$y_k = DB_k\, M_k\, x + n_k,$$

$k = 1,2,...,p$

(Here, $\mathbf{M_k}$ is a geometrical warping matrix representing a relative shift, $\mathbf{B_k}$ is a matrix representing a blur, $\mathbf{D}$ is a matrix representing undersampling from SR image to LR image, $\mathbf{n_k}$ represents noise including compression noise, and $\mathbf{x}$ represents the SR image.)

**3.** The method as set forth in Claim 1, comprising steps of:

(a) magnifying one of the P LR images by interpolation, followed by setting the magnified one as an initial SR image $\mathbf{x^n}$;

(b) blurring and down-sampling an image which is obtained by performing the registration on the SR image $\mathbf{x^n}$ by an estimated motion parameter value of the k-th LR image $\mathbf{y_k}$, followed by calculating a image difference between the blurred/down-sampled image and the k-th LR image $\mathbf{y_k}$;

(c) estimating a one-step correlation parameter in the first-order Markov process for each block of the image difference, followed by multiplying the one-step correlation parameter by a covariance matrix, and by up-sampling and re-blurring the resultant image;

(d) performing the inverse-registration on the resultant image of the step (c) by an amount of the estimated motion parameter value of $\mathbf{y_k}$ ;

(e) calculating a normalization function $\alpha_k(\mathbf{x})$ ;

(f) calculating a difference between the SR image $\mathbf{x^n}$ and a nonstationary mean of the SR image, $\bar{\mathbf{x}}$, followed by multiplying the resultant image difference by $\alpha_k(\mathbf{x})$ ;

(g) obtaining a difference image between the image obtained in the step (d) and the image obtained in the step (f);

(h) executing the steps (a) through (g) for each of the LR images (k=1,......, p), followed by summing up the resultant image differences;

(i) multiplying the resultant image of the step (h) by a convergence rate control parameter, followed by adding the high-resolution image $\mathbf{x^n}$ to the multiplied result to obtain a new image $\mathbf{x^{n+1}}$ ; and

(j) repeating the steps (a) through (i) until $\mathbf{x^{n+1}}$ converges to $\mathbf{x^n}$ to obtain the SR image $\mathbf{x}$.

**4.** The method as set forth in Claim 3, wherein the compression noise is represented by a vector $\mathbf{n}$, which is lexico-graphically arranged in an arbitrary block of an image, to model a probability density function of a quantization noise in a DCT domain as $P_N(n) = Z \exp(-\tfrac{1}{2}n^T R_n^{-1} n)$ (Here, $Z$ is a normalizing constant and $\mathbf{R_n}$ is a covariance matrix).

**5.** The method as set forth in Claim 4, wherein the inverse matrix $\mathbf{R}_n^{-1}$ of the covariance matrix is modeled as a matrix having a DCT basis function as an eigenvector.

**6.** The method as set forth in Claim 3, wherein the one-step correlation parameter is estimated in each DCT block using a biased sample operator.

**7.** The method as set forth in Claim 1, wherein the motion estimation parameter $\mathbf{R_k}$ is represented by $\mathbf{R_k = M^{-1}V_k}$. (Here,

$$\mathbf{M} = \begin{bmatrix} \sum\left(\dfrac{d\mathbf{y}_1(x,y)}{dx}\right)^2 & \sum\left(\dfrac{d\mathbf{y}_1(x,y)}{dx}\dfrac{d\mathbf{y}_1(x,y)}{dy}\right) \\ \sum\left(\dfrac{d\mathbf{y}_1(x,y)}{dx}\dfrac{d\mathbf{y}_1(x,y)}{dy}\right) & \sum\left(\dfrac{d\mathbf{y}_1(x,y)}{dy}\right)^2 \end{bmatrix},$$

$$\mathbf{R}_k = \left[\delta_{h,k},\delta_{v,k}\right]^T$$

**EP 1 492 051 A2**

$$\mathbf{V}_k = \begin{bmatrix} \sum \left(\mathbf{y}_k(x,y) - \mathbf{y}_1(x,y)\right)\dfrac{d\mathbf{y}_1(x,y)}{dx} \\ \sum \left(\mathbf{y}_k(x,y) - \mathbf{y}_1(x,y)\right)\dfrac{d\mathbf{y}_1(x,y)}{dy} \end{bmatrix} )$$

8. The method as set forth in Claim 1, wherein, when the compression noise is represented by the lexicographically arranged vector **n**, the inverse matrix of the covariance matrix representing correlation of **n** is modeled as a kronecker product of tridiagonal Jacobi matrix having the DCT basis function as an eigenvector.

9. The method as set forth in Claim 1, wherein the smoothing constraint is

$$P_X(\mathbf{x}) = Z \exp\!\left(-\tfrac{1}{2}(\mathbf{x} - \bar{\mathbf{x}})^{\mathrm{T}}(\mathbf{x} - \bar{\mathbf{x}})\right).$$

(Here, $\bar{\mathbf{x}}$ represents the nonstationary mean of **x**;

$$\bar{\mathbf{x}}(i,j) = \begin{cases} \dfrac{1}{h} \displaystyle\sum_{k,l \in h} \hat{\mathbf{y}}(i-k, j-l), & \text{if } (i,j) \in \text{block boundary} \\[2ex] \dfrac{1}{\sum_{i,l} w_{k,l}} \displaystyle\sum_{k,l \in h} w_{k,l}\hat{\mathbf{y}}(i-k, j-l), & \text{otherwise} \end{cases}$$

$$w_{k,l} = \begin{cases} 1, & \text{if } |\hat{\mathbf{y}}(i,j) - \hat{\mathbf{y}}(k,l)| < \mathrm{T} \\ 0, & \text{if } |\hat{\mathbf{y}}(i,j) - \hat{\mathbf{y}}(k,l)| > \mathrm{T} \end{cases} )$$

10. The method as set forth in Claim 1, wherein the method further comprises a step of controlling balance between image fidelity and the smoothing constraint using the following equation.

$$\alpha_k(\mathbf{x}) = \frac{\left\|\mathbf{y}_k - \mathrm{DB}_k\mathbf{M}_k\mathbf{x}\right\|^2_{\mathbf{K}_k(\mathbf{x})^{-1}}}{\dfrac{1}{\gamma_k} - \left\|\mathbf{x}-\bar{\mathbf{x}}\right\|^2}$$

# FIG.1

SUB-PIXEL SHIFT

INTEGER SUB-PIXEL SHIFT

● : REFERENCE LOW-RESOLUTION IMAGE

# FIG.2

DESIRED HF IMAGE     K-th WARPED HR IMAGE

DOWN SAMPLING     K-th OBSERVED LR IMAGE

SAMPLING     WARPING     BLUR

CONTINUOUS SCENE

CONTINUOUS TO DISCRETE WITHOUT ALIASING

TRANSLATION ROTATION, etc.

OPTICAL BLUR MOTION BLUR SENSOR PSF

UNDER SAMPLING $(L_1, L_2)$

NOISE

# FIG.3

————— : ORIGINAL HR GRID

● : ORIGINAL HR PIXELS

▲ ◇ : SHIFTED HR PIXELS

# FIG.4

HR PIXEL

HR GRID

LR GRID

$a_0$ $a_1$
$a_2$ $a_3$

LR PIXEL ( $= \dfrac{\Sigma a_i}{4}$ )

HR IMAGE

LR IMAGE

# FIG.5

$x''$

S101 — REGISTRATION

$\downarrow M_k x''$

S102 — BLURRING

$\downarrow B_k M_k x''$

S103 — DOWN-SAMPLING

$\downarrow DB_k M_k x''$

S104 — SUBRACTING K-TH LOW-RESOLUTION IMAGE

$\downarrow y_k - DB_k M_k x''$

S105 — MULTIPLICATION WITH NOISE COVARIANCE

$\downarrow K_k(x'')^{-1}(y_k - DB_k M_k x'')$

S106 — UNSAMPLING

$\downarrow D^T K_k(x'')^{-1}(y_k - DB_k M_k x'')$

S107 — RE-BLURING

$\downarrow B_k^T D^T K_k(x'')^{-1}(y_k - DB_k M_k x'')$

S108 — REGISTRATION

$\downarrow M_k^T B_k^T D^T K_k(x'')^{-1}(y_k - DB_k M_k x'')$

S110 — ESTIMATE NOISE CORRELATION PARAMETER

$\rho$

S111 — SUBRACTING MEAN

$x'' - \bar{x}$

S112 — CALCULATE REGULARIZATION FUNCTION

$\alpha_k(x'')$

$\otimes$ S113    $\alpha_k(x'')(x'' - \bar{x})$

$+ \;\Sigma\; -$    S114

S109 — FUSING FOR ALL K AND UPDATE PREVIOUS X

$\downarrow x^{n+1}$    S115

NO ◇ COVERGE? YES → SUPER-RESOLUTION IMAGE

# FIG.6A

# FIG.6B

# FIG.6C

# FIG.6D

# FIG.7

# FIG.8A

# FIG.8B